# EUROPÄISCHE PATENTSCHRIFT

(11) **EP 1 966 017 B1**
(45) Veröffentlichungstag und Bekanntmachung des Hinweises auf die Patenterteilung: **27.05.2009**
(21) Anmeldenummer: 06829800.9
(22) Anmeldetag: 21.12.2006
(51) Int. Cl.: B60T 13/68, B60T 7/12

(54) **BREMSSYSTEM EINES FAHRZEUGS MIT IN GEFAHRENSITUATIONEN VOREINGESTEUERTEM BREMSDRUCK**
MOTOR VEHICLE BRAKE SYSTEM WITH BRAKE PRESSURE WHICH IS PRECONTROLLED IN DANGEROUS SITUATIONS
SYSTEME DE FREINAGE DE VEHICULE A MOTEUR A PRESSION DE FREINAGE PREALABLEMENT COMMANDEE DANS LES SITUATIONS DE DANGER

(30) Priorität: 22.12.2005 DE 102005061551
(43) Veröffentlichungstag der Anmeldung: 10.09.2008
(73) Patentinhaber: KNORR-BREMSE SYSTEME FÜR NUTZFAHRZEUGE GMBH, 80809 München (DE)
(72) Erfinder: BARTA, Gabor, 1028 Budapaest (HU); WERNER, Frank, 71254 Ditzingen (DE); MUSTAPHA, Adnan, 75433 Maulbronn (DE); SZABO, Gergely, H-1125 Budapest (HU); DOHANY, Tamás, H-1221 Budapest (HU); STRAUB, Kornél, H-2013 Pomáz (HU)
(74) Vertreter: Schönmann, Kurt
(86) Internationale Anmeldenummer: PCT/EP2006/012360
(87) Internationale Veröffentlichungsnummer: WO 2007/076947

(56) Entgegenhaltungen:
- WO-A-03/033321
- WO-A-20/04028847
- WO-A-20/04098967

## Beschreibung

### Stand der Technik

Die Erfindung geht aus von einem Bremssystem eines Fahrzeugs, beinhaltend eine erste, von einem fahrerbetätigten Betriebsbremswertgeber angesteuerte Steuerventileinrichtung, welche in Abhängigkeit eines vom Betriebsbremswertgeber ausgesteuerten Bremsanforderungssignals einen Bremsdruck für wenigstens einen Bremszylinder erzeugt, wenigstens eine zweite Steuerventileinrichtung zum schlupfabhängigen Regeln des von der ersten Steuerventileinrichtung ausgesteuerten Bremsdrucks, wobei der von der ersten Steuerventileinrichtung erzeugte Bremsdruck in einer sich zwischen der ersten Steuerventileinrichtung und der zweiten Steuerventileinrichtung erstreckenden Druckleitung geführt ist, und wenigstens die erste Steuerventileinrichtung und die zweite Steuerventileinrichtung von einem elektronischen Steuergerät angesteuert sind, gemäß dem Oberbegriff von Anspruch 1.

Ein Bremssystem dieser Gattung ist aus dem Dokument WO-A-03/033321 bekannt.

Bei einem solchen Bremssystem kann es sich beispielsweise um ein elektronisch geregeltes Bremssystem (EBS) handeln, wie es aus dem Kraftfahrtechnischen Taschenbuch der Robert Bosch GmbH, 24.Auflage, 2002 bekannt und insbesondere in Nutzfahrzeugen eingesetzt wird. Dabei besteht die erste Steuerventileinrichtung zumeist aus einem wenigstens einkanaligen Druckregelmodul, welches die Schnittsstelle zwischen dem elektronischen Bremssystem und der pneumatischen Bremskraft bilden. Sie setzen die vom Betriebsbremswertgeber erzeugten und über einen Datenbus übertragenen elektrischen Bremsanforderungssignale in pneumatische Bremsdrücke für die nachgeordneten Bremszylinder um. Die Umsetzung erfolgt mit wenigstens einer Regelelektronik und einem Relaisventil, welches von wenigstens einem elektromagnetischen Einlassventil und einem elektromagnetischen Auslassventil oder von einem elektromagnetischen Proportionalventil angesteuert wird, sowie mit einem elektromagnetischen Rückhalteventil und einem Drucksensor, der den ausgesteuerten Bremsdruck misst. Somit kann eine Bremsdruckregelung in einem geschlossenen Regelkreis stattfinden. Der Bremsdruck kann dabei je nach Ausführung des Druckregelmoduls oder achsweise eingeregelt werden. Das Rückhalteventil hält ein vom Betriebsbremswertgeber parallel zum elektrischen Bremsanforderungssignal erzeugtes pneumatisches Signal zurück solange die elektronische Regelung intakt ist. Im Falle eines Defekts schaltet das Rückhalteventil durch und das Relaisventil wird von diesem pneumatischen Signal gesteuert.

Weiterhin sind moderne Nutzfahrzeuge meist mit einem Antiblockiersystem (ABS) ausgestattet, welches die von den Druckregelmoduln ausgesteuerten Bremsdrücke derart regelt, dass das Fahrzeug mit einem optimalen Schlupf eingebremst werden kann und ein Blockieren der Räder weitgehend verhindert wird. Ein solches ABS besteht aus Drehzahlsensoren, einem elektronischen Steuergerät und Drucksteuerventilen. Es regelt in jedem Bremszylinder den Bremsdruck, indem dieser aufgebaut, konstant gehalten oder durch Ablassen in die Umgebung abgebaut wird, um ein Radblockieren zu verhindern. Insofern beinhaltet die zweite Steuerventileinrichtung wenigstens ein elektromagnetisches Drucksteuerventil umfassend wenigstens ein 3/2-Wegeventil zum Druckhalten, Druckaufbau oder Druckabbau, welches in der Regel radnah angeordnet ist. Gegebenenfalls kann das Drucksteuerventil auch mit Relaiswirkung ausgebildet sein. Während einer Bremsung ohne Ansprechen von ABS, d.h. wenn kein Rad zum Blockieren neigt, durchströmt die vom zugeordneten Druckregelmodul über die Druckleitung zugeführte Druckluft das Drucksteuerventil ungehindert in beiden Richtungen. Damit ist sichergestellt, dass die Funktion der Betriebsbremsanlage durch die ABS-Drucksteuerventile nicht behindert wird.

Der vorliegenden Erfindung liegt demgegenüber die Aufgabe zugrunde, ein elektronisch geregeltes Bremssystem der eingangs erwähnten Art derart weiter zu entwickeln, dass es insbesondere in Gefahrensituationen schneller anspricht.

Diese Aufgabe wird erfindungsgemäß durch die Merkmale von Anspruch 1 gelöst.

### Vorteile der Erfindung

Die Erfindung basiert auf dem Gedanken, das Fahrverhalten des Fahrers zu überwachen. Während einer Fahrt ohne Notbremserfordemis betätigt der Fahrer das Kupplungs- und Gaspedal relativ langsam bzw. mit geringer Kraft, ebenso langsam erfolgt die Betätigung des Lenkrads, da keine plötzliche Richtungsänderung erforderlich ist. In einer eine Notbremsung erfordernden Gefahrensituation sind diese Betätigungsbewegungen in der Regel wesentlich schneller bzw. erfolgen mit höherer Kraft, was sich beispielsweise in schnelleren Lenkbewegungen oder in einer schnelleren Lösebewegung des Gaspedals äußert. Beim Auftreten von solchen Signalen kann daher von einer Gefahrensituation ausgegangen werden, welche eine Not- oder Schnellbremsung erfordert.

Die Erfindung geht deshalb davon aus, dass sich eine Notbremsung erfordernde Gefahrensituation durch eine Änderung von wenigstens einer Kenngröße ankündigt, wie beispielsweise der Geschwindigkeit und/oder der Beschleunigung, mit welcher ein Lenkrad des Fahrzeugs betätigt wird und/oder mit welcher ein Kupplungspedal des Fahrzeugs betätigt wird und/oder mit welcher die auf ein Gaspedal wirkende Betätigungskraft gelöst wird. Für den Fall, dass das Fahrzeug mit einer Adaptive Cruise Control (ACC) ausgestattet ist, durch welche ein von der Geschwindigkeit abhängiger Abstand zum vorausfahrenden Fahrzeug eingehalten werden kann oder wenn es auch nur mit einem oder mehreren Abstandssensoren versehen ist, kommt als Kenngröße beispielsweise der Abstand und/oder die Relativgeschwindigkeit des Fahrzeugs in Bezug zu einem anderen Fahrzeug oder in Bezug zu einem ruhenden Objekt in Frage. Von einer Gefahrensituation kann insbesondere dann ausgegangen werden, wenn eine oder mehrere solcher Kenngrößen einen definierten Grenzwert über- oder unterschreitet oder von einem solchen abweicht. Gemäß der Erfindung sind deshalb Mittel zur Erkennung einer solchen, eine Notbremsung erfordernden Gefahrensituation vorgesehen, welche im Falle des Vorliegens einer solchen Gefahrensituation ein Gefahrensignal aussteuern.

Um für einen solchen Fall ein schnelleres Ansprechen des elektronischen Bremssystems zu erzielen, ist das elektronische Steuergerät derart ausgebildet, dass es, vorausgesetzt der Fahrer hat den Betriebsbremswertgeber noch nicht betätigt, die erste Steuerventileinrichtung und die zweite Steuerventileinrichtung ansteuert, um zunächst eine Strömungsverbindung zwischen der Druckleitung und dem wenigstens einen Bremszylinder zu sperren und dann Druck in die Druckleitung einzusteuem. Dann steht durch die in Sperrstellung gehaltene zweite Steuerventileinrichtung bereits vor der Bremspedalbetätigung Druck in der Druckleitung an. Bei Betätigung des Betriebsbremswertgebers durch den Fahrer kann dann die zweite Steuerventileinrichtung den in der Druckleitung anstehenden Druck zum Bremszylinder durchsteuem bzw. modulieren, um eine im wesentlichen schlupffreie Bremsung zu ermöglichen.

Dadurch verkürzt sich in vorteilhafter Weise der Weg, den das Druckmedium von der ersten Steuerventileinrichtung bis zum Bremszylinder zurücklegen muss, indem es bereits vor Einleiten der Bremsung durch den Fahrer in der Druckleitung und damit am Eingang der radnah angeordneten zweiten Steuerventileinrichtung ansteht und von dort nach Betätigung des Betriebsbremswertgebers im wesentlichen ohne Umwege in den Bremszylinder zum Aufbau von Bremskraft eingeleitet wird. Durch die erfindungsgemäßen Maßnahmen reduziert sich folglich die Reaktionszeit des Bremssystems im Falle einer Gefahrensituation und sein Ansprechverhalten verbessert sich.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt sind die Mittel zur Erkennung einer eine Notbremsung erfordernden Gefahrensituation derart ausgebildet, dass während der Fahrt ein fahrerbezogener Mittelwert und/oder ein fahrerbezogener Maximalwert aus einer Reihe von gespeicherten Werten wenigstens einer Kenngröße ermittelt und ein Gefahrensignal erzeugt wird für den Fall, dass der fahrerbezogene Mittelwert und/oder der fahrerbezogene Maximalwert einen Grenzwert über- oder unterschreitet. Dann wird folglich während unkritischer Fahrsituationen ein fahrerbezogenes Profil der Fahrweise ermittelt und bei Abweichen von diesem Profil ein Gefahrensignal erzeugt, welches das elektronische Bremssystem in oben beschriebener Weise beeinflusst.

Genaueres geht aus der folgenden Beschreibung eines Ausführungsbeispiels hervor.

### Zeichnungen

Nachstehend ist ein Ausführungsbeispiel der Erfindung in der Zeichnung dargestellt und in der nachfolgenden Beschreibung näher erläutert. In der Zeichnung zeigt die einzige Figur eine schematische Darstellung eines elektronischen Bremssystems gemäß einer bevorzugten Ausführungsform der Erfindung.

### Beschreibung des Ausführungsbeispiels

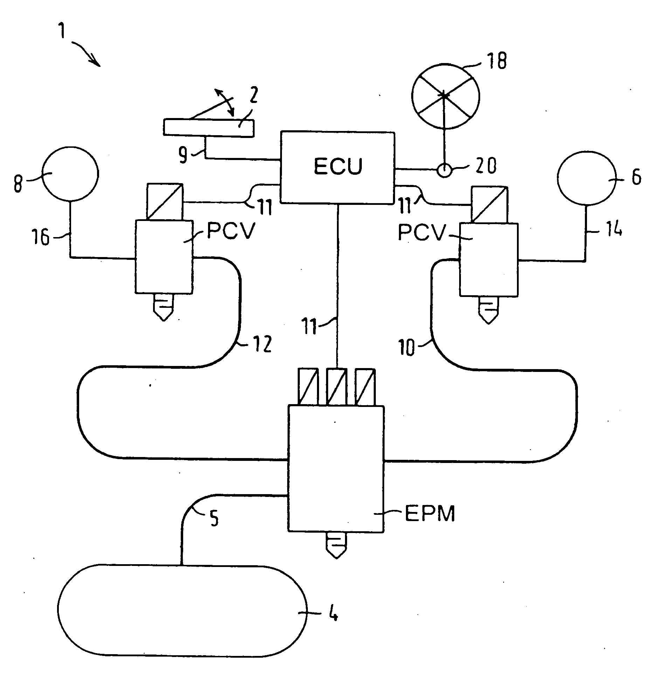

In Fig.1 ist zur beispielhaften Erläuterung der Erfindung ein Schemabild eines elektronisch geregelten Bremssystems (EBS) 1 eines Nutzfahrzeugs gezeigt, welches mit Druckluft als Arbeitsmedium arbeitet. Das elektronisch geregelte Bremssystem 1 beinhaltet eine erste Steuerventileinrichtung EPM, welche in Abhängigkeit eines von einem Betriebsbremswertgeber 2 ausgesteuerten Bremsanforderungssignals, das beispielsweise über einen Fahrzeugdatenbus CAN (Controller Area Network) oder auch als analoges Signal über eine elektrische Steuerleitung 9 in ein elektronisches Steuergerät ECU eingesteuert und dort in ein Bremssolldrucksignal gewandelt wird, einen Bremsdruck für zwei Bremszylinder 6, 8 erzeugt. Hierzu steht die erste Steuerventileinrichtung EPM über eine Druckleitung 5 mit einem Druckspeicher 4 in Strömungsverbindung. Die beiden Bremszylinder 6 und 8 sind zwei Rädern einer Achse zugeordnet. Dieser ersten Steuerventilanordnung EPM nachgeordnet sind vorzugsweise zwei, je einem Bremszylinder 6, 8 zugeordnete zweite Steuerventileinrichtungen PCV zum radschlupfabhängigen Regeln des von der ersten Steuerventileinrichtung EPM ausgesteuerten Bremsdrucks. Dabei ist der von der ersten Steuerventileinrichtung EPM erzeugte Bremsdruck in sich zwischen Ausgängen der ersten Steuerventileinrichtung EPM und Eingängen der zweiten Steuerventileinrichtung PCV erstreckenden Druckleitungen 10, 12 geführt. Die erste Steuerventileinrichtung EPM und die zweite Steuerventileinrichtung PCV werden vorzugsweise von dem einzigen elektronischen Steuergerät ECU über elektrische Steuerleitungen 11 angesteuert.

Dabei besteht die erste Steuerventileinrichtung beispielsweise aus einem vorzugsweise einkanaligen Druckregelmodul DRM oder EPM, welcher auch mehrkanalig ausgebildet sein kann, d.h. dass in jedem Kanal unterschiedliche Bremsdrücke erzeugt werden können. Er ist beispielsweise achsnah zu der Achse angeordnet und setzt die vom Betriebsbremswertgeber 2 erzeugten und vom zentralen elektronischen Steuergerät ECU über den Datenbus CAN übertragenen elektrischen Bremsanforderungssignale in pneumatische Bremsdrücke für die beiden nachgeordneten Bremszylinder 6 und 8 um. Die Umsetzung erfolgt mit wenigstens einer beispielsweise in ein lokales Steuergerät integrierten Regelelektronik, einem Relaisventil, welches von wenigstens einem elektromagnetischen Einlassventil und einem elektromagnetischen Auslassventil oder von einem elektromagnetischen Proportionalventil angesteuert wird, sowie mit einem elektromagnetischen Rückhalteventil und einem Drucksensor, der den ausgesteuerten Bremsdruck misst. Somit kann eine Bremsdruckregelung in einem geschlossenen Regelkreis stattfinden. Der Bremsdruck kann dabei je nach Ausführung des EPM rad- oder achsweise eingeregelt werden, im vorliegenden Fall eines einkanaligen Druckregelmoduls EPM werden beide Bremszylinder 6, 8 im Normalbremsfall mit dem gleichen Bremsdruck beaufschlagt.

Das Nutzfahrzeug ist weiterhin mit einem Antiblockiersystem (ABS) ausgestattet, wobei der vom Druckregelmodul EPM ausgesteuerte Bremsdruck radindividuell derart geregelt wird, dass das Fahrzeug mit einem optimalen Schlupf eingebremst werden kann und ein Blockieren der Räder weitgehend verhindert wird. Ein solches ABS beinhaltet Drehzahlsensoren, eine Regelelektronik, die vorzugsweise in das elektronische Steuergerät ECU integriert ist und wenigstens ein Drucksteuerventil PCV als zweite Steuerventileinrichtung. Die Drucksteuerventile PCV regeln in jedem Bremszylinder 6, 8 den über Druckleitungen 14, 16 in die Bremszylinder 6, 8 eingesteuerten Bremsdrücke, indem diese aufgebaut, konstant gehalten oder durch Ablassen in die Umgebung abgebaut werden, um ein Radblockieren zu verhindern. Der vom Druckregelmodul EPM ausgesteuerte zunächst einheitliche Bremsdruck wird bei Gefahr von Radblockieren während einer Bremsung von den Drucksteuerventilen PCV folglich radindividuell geregelt.

Die elektromagnetischen Drucksteuerventile PCV sind jeweils radnah oder bremszylindemah angeordnet und umfassen jeweils wenigstens ein 3/2-Wegeventil zum Druckhalten, Druckaufbau oder Druckabbau. Gegebenenfalls können die Drucksteuerventile PCV auch mit Relaiswirkung ausgebildet sein. Während einer Bremsung ohne Ansprechen von ABS, d.h. wenn kein Rad eine Blockierneigung aufweist, durchströmt die vom Druckregelmodul EPM über die Druckleitungen 10, 12 zugeführte Druckluft die dann durchgeschalteten Drucksteuerventile PCV ungehindert in beiden Richtungen. Damit ist sichergestellt, dass die Funktion der Betriebsbremsanlage durch die Drucksteuerventile PCV nicht behindert wird.

Der Aufbau und die Funktionsweise eines solchen Druckregelmoduls EPM und eines solchen Druckstreuerventils PCV sind hinlänglich bekannt, beispielsweise aus dem Kraftfahrtechnischen Taschenbuch der Robert Bosch GmbH, 24.Auflage, 2002. Deshalb soll hier nicht weiter darauf eingegangen werden.

Darüber hinaus umfasst das erfindungsgemäße elektronische Bremssystem 1 Mittel zur Erkennung einer eine Notbremsung erfordernden Gefahrensituation, welche im Falle des Vorliegens einer solchen Gefahrensituation ein Gefahrensignal aussteuern. Diese Mittel beinhalten eine elektronische Schaltung, welche vorzugsweise in das zentrale elektronische Steuergerät ECU integriert ist.

Eine Notbremsung erfordernde Gefahrensituation kann sich durch eine Änderung wenigstens einer Kenngröße ankündigen, wie beispielsweise der Geschwindigkeit und/oder der Beschleunigung, mit welcher ein Lenkrad 18 des Nutzfahrzeugs betätigt wird und/oder mit welcher ein Kupplungspedal des Nutzfahrzeugs betätigt wird und/oder mit welcher die auf ein Gaspedal wirkende Betätigungskraft gelöst wird. Für den Fall, dass das Nutzfahrzeug mit einer Adaptive Cruise Control (ACC) ausgestattet ist, durch welche ein von der Geschwindigkeit abhängiger Abstand zu einem vorausfahrenden Fahrzeug eingehalten werden kann oder wenn es mit einem oder mehreren Abstandssensoren versehen ist, kommt als Kenngröße beispielsweise der Abstand und/oder die Relativgeschwindigkeit des Nutzfahrzeugs in Bezug zu einem anderen Fahrzeug oder in Bezug zu einem ruhenden Objekt in Frage. Zur Überwachung dieser Kenngrößen sind entsprechende Sensoren am Nutzfahrzeug vorhanden, beispielsweise ein Lenkwinkelsensor 20, aus dessen Signal die momentane Lenkgeschwindigkeit bzw. Lenkbeschleunigung des Lenkrades 18 ermittelt und als Kenngröße in das elektronische Steuergerät ECU einsteuert wird. Denkbar ist auch ein dem Lenkrad 18 oder der Lenksäule zugeordneter Kraftsensor, welcher die Lenkkräfte misst. Weiterhin kann das Nutzfahrzeug mit einem Abstandssensor, beispielsweise mit einem Abstandsradar versehen sein, mit welchem der Abstand und/oder die Relativgeschwindigkeit in Bezug zu einem vorausfahrenden Fahrzeug oder in Bezug zu einem ruhenden Objekt ermittelbar ist. Die Auswertung der Sensorsignale erfolgt vorzugsweise durch das elektronische Steuergerät ECU.

Als Kenngröße denkbar sind demzufolge alle Parameter und Größen, deren Änderung auf eine eine Notbremsung erfordernde Gefahrensituation mit einer gewissen Wahrscheinlichkeit hinweisen. Von einer Gefahrensituation wird insbesondere dann ausgegangen, wenn eine oder mehrere solcher Kenngrößen einen definierten Grenzwert über- oder unterschreiten. Im Falle einer Überwachung des Abstands zu einem vorausfahrenden Fahrzeug kann eine Gefahrensituation beispielsweise gegeben sein, wenn der gemessene Abstand einen einzuhaltenden Mindestabstand überschreitet, während im Falle der Überwachung der Lenkwinkelgeschwindigkeit von einer Gefahrensituation ausgegangen werden kann, wenn die momentane Lenkwinkelgeschwindigkeit einen Lenkwinkelgeschwindigkeitsgrenzwert überschreitet.

Nicht zuletzt kann während einer unkritischen Fahrt ein fahrerbezogener Mittelwert und/oder ein fahrerbezogener Maximalwert aus einer Reihe von gespeicherten Werten wenigstens einer Kenngröße ermittelt und ein Gefahrensignal für den Fall erzeugt werden, dass der fahrerbezogene Mittelwert und/oder der fahrerbezogene Maximalwert einen Grenzwert über- oder unterschreitet. Auf diese Weise kann während unkritischer Fahrsituationen ein fahrerbezogenes Profil der Fahrweise ermittelt werden, welches als Datensatz im elektronischen Steuergerät ECU abgespeichert wird. Bei Abweichen von diesem gespeicherten Profil kann auf eine kritische, eine Notbremsung erfordernde Gefahrensituation geschlossen werden, wenn ein das Lenkrad 18 ansonsten mir ruhiger Hand führender Fahrer selbiges plötzlich mit großer Kraft oder hoher Drehgeschwindigkeit oder -beschleunigung betätigt.

Falls nun also der Fall eintritt, dass der Fahrer das Lenkrad 18 schneller betätigt als dies üblicherweise der Fall ist, z.B. um einem plötzlich auftauchenden Hindernis auszuweichen, wenn also die gemessene aktuelle Lenkwinkelgeschwindigkeit einen gespeicherten Grenzwert überschreitet, so wird dies vom Lenkwinkelsensor 20 erfasst und von den Steuerroutinen des elektronischen Steuergeräts ECU als Gefahrensignal interpretiert. Falls der Fahrer den Betriebsbremswertgeber 2 noch nicht betätigt hat, werden sodann das Druckregelmodul EPM und die Druckstreuerventile PCV vom elektronischen Steuergerät ECU angesteuert, um zunächst eine Strömungsverbindung zwischen den Druckleitungen 10, 12 und den Bremszylindern 6, 8 zu sperren und dann mittels des Druckregelmoduls EPM Druck in die Druckleitungen 10, 12 einzusteuem, beispielsweise 10 10⁵ Pa.

Dann steht durch die in Sperrstellung gehaltenen Drucksteuerventile PCV bereits vor einer Bremspedalbetätigung durch den Fahrer Druck in den Druckleitungen 10, 12 an. Bei der anschließenden Betätigung des Betriebsbremswertgebers 2 durch den Fahrer werden die Drucksteuerventile PCV durchgeschaltet, so dass der in der Druckleitung 10, 12 vorgehaltene Druck dann direkt zu den Bremszylindern 6, 8 durchgesteuert wird, um dort schnellstmöglich Bremsdruck aufzubauen. Weiterhin wird der in den Druckleitungen 10, 12 anstehende Druck nach einer Betätigung des Betriebsbremswertgebers 2 durch den Fahrer schnell an einen dem Bremsanforderungssignal entsprechenden Bremsdrucksollwert angepasst. Dieser auf den Sollwert eingeregelte Druck wird dann im Falle einer Blockierneigung eines oder beider Räder weiterhin durch die Drucksteuerventile PCV im Sinne von Druckaufbau, Druckabbau oder Druckhalten moduliert, um eine im wesentlichen schlupffreie Bremsung zu ermöglichen.

Die Erfindung ist jedoch nicht auf eine Anwendung bei elektronischen Bremssysteme beschränkt, vielmehr kann sie bei jeglicher Art von Bremssystemen eingesetzt werden, welche die Merkmale des Oberbegriffs von Anspruch 1 aufweisen.

### Bezugszeichenliste

- 1: Elektronisches Bremssystem
- 2: Betriebsbremswertgeber
- 4: Druckspeicher
- 5: Druckleitung
- 6: Bremszylinder
- 8: Bremszylinder
- 9: elektr. Steuerleitung
- 10: Druckleitung
- 11: elektr. Steuerleitung
- 12: Druckleitung
- 14: Druckleitung
- 16: Druckleitung
- 18: Lenkrad
- 20: Lenkwinkelsensor

## Patentansprüche

1. Bremssystem (1) eines Fahrzeugs, beinhaltend
a) eine erste, von einem fahrerbetätigten Betriebsbremswertgeber (2) angesteuerte Steuerventileinrichtung (EPM), welche in Abhängigkeit eines vom Betriebsbremswertgeber (2) ausgesteuerten Bremsanforderungssignals einen Bremsdruck für wenigstens einen Bremszylinder (6, 8) erzeugt,
b) wenigstens eine zweite Steuerventileinrichtung (PCV) zum schlupfabhängigen Regeln des von der ersten Steuerventileinrichtung (EPM) ausgesteuerten Bremsdrucks, wobei
c) der von der ersten Steuerventileinrichtung (EPM) erzeugte Bremsdruck in einer sich zwischen der ersten Steuerventileinrichtung (EPM) und der zweiten Steuerventileinrichtung (PCV) erstreckenden Druckleitung (10, 12) geführt ist, und
d) wenigstens die erste Steuerventileinrichtung (EPM) und die zweite Steuerventileinrichtung (PCV) von einem elektronischen Steuergerät (ECU) angesteuert sind,
**dadurch gekennzeichnet, dass**
e) Mittel zur Erkennung einer eine Notbremsung erfordernden Gefahrensituation vorgesehen sind, welche im Falle des Vorliegens einer solchen Gefahrensituation ein Gefahrensignal aussteuern, wobei
f) das elektronische Steuergerät (ECU) derart ausgebildet ist, dass es falls ein Gefahrensignal erzeugt wurde und der Fahrer den Betriebsbremswertgeber (2) noch nicht betätigt hat die erste Steuerventileinrichtung (EPM) und die zweite Steuerventileinrichtung (PCV) ansteuert, um zunächst eine Strömungsverbindung zwischen der Druckleitung (10, 12) und dem wenigstens einen Bremszylinder (6, 8) zu sperren und dann Druck in die Druckleitung (10, 12) einzusteuem.

2. Bremssystem nach Anspruch 1, **dadurch gekennzeichnet, dass** das elektronische Steuergerät (ECU) derart ausgebildet ist, dass bei einer Betätigung des Betriebsbremswertgebers (2) durch den Fahrer die zweite Steuerventileinrichtung (PCV) den in der Druckleitung (10, 12) anstehenden Druck zum Bremszylinder (6, 8) verändert oder unverändert durchsteuert.

3. Bremssystem nach Anspruch 1 oder 2, **dadurch gekennzeichnet, dass** die Mittel zur Erkennung einer eine Notbremsung erfordernden Gefahrensituation derart ausgebildet sind, dass sie ein Gefahrensignal erzeugen, wenn wenigstens eine der folgenden Kenngrößen oder wenigstens eine aus mindestens zwei dieser Kenngrößen abgeleitete Kenngröße einen definierten Grenzwert über- oder unterschreitet: Die Geschwindigkeit und/oder die Beschleunigung, mit welcher ein Lenkrad (18) des Fahrzeugs betätigt wird und/oder mit welcher ein Kupplungspedal des Fahrzeugs betätigt wird und/oder mit welcher die auf ein Gaspedal wirkende Betätigungskraft gelöst wird und/oder der Abstand und/oder die Relativgeschwindigkeit des Fahrzeugs in Bezug zu einem anderen Fahrzeug oder in Bezug zu einem ruhenden Objekt.

4. Bremssystem nach Anspruch 3, **dadurch gekennzeichnet, dass** die Mittel zur Erkennung einer eine Notbremsung erfordernden Gefahrensituation derart ausgebildet sind, dass während der Fahrt ein fahrerbezogener Mittelwert und/oder ein fahrerbezogener Maximalwert aus einer Reihe von gespeicherten Werten wenigstens einer Kenngröße ermittelt und ein Gefahrensignal erzeugt wird für den Fall, dass der fahrerbezogene Mittelwert und/oder der fahrerbezogene Maximalwert einen Grenzwert über- oder unterschreitet.

5. Bremssystem nach wenigstens einem der vorhergehenden Ansprüche, **dadurch gekennzeichnet, dass** die erste Steuerventileinrichtung (EPM) durch ein wenigstens einkanaliges Druckregelmodul gebildet wird, mit wenigstens einer Regelelek-tronik, einem Relaisventil, welches von wenigstens einem elektromagnetischen Einlassventil und einem elektromagnetischen Auslassventil angesteuert wird, sowie mit einem Drucksensor.

6. Bremssystem nach wenigstens einem der vorhergehenden Ansprüche, **dadurch gekennzeichnet, dass** die zweite Steuerventileinrichtung (PCV) wenigstens ein elektromagnetisches Drucksteuerventil beinhaltet, umfassend wenigstens ein 3/2-Wegeventil zum Druckhalten, Druckaufbau oder Druckabbau.

## Claims

1. Vehicle brake system (1), comprising
(a) a first control valve means (EPM) controlled by an operator-actuated service brake value generator (2), which, in response to a brake demand signal modulated by said service brake value generator (2), generates a brake pressure for at least one brake cylinder (6, 8),
(b) at least one second control valve means (PCV) for slip-sensitive regulating control of said brake pressure modulated by said first control valve means (EPM),
(c) with the brake pressure generated by said first control valve means (EPM) being supplied in a delivery line (10, 12) extending between said first control valve means (EPM) and said second control valve means (PCV), and
(d) with at least said first control valve means (EPM) and said second control valve means (PCV) being controlled by an electronic controller (ECU),
**characterised in that**
(e) means are provided for detecting a dangerous situation requiring emergency brake application, which modulate a danger signal when such a dangerous situation prevails,
(f) with said electronic controller (EC) being configured in such a way that it controls said first control valve means (EPM) and said second control valve means (PCV) if a danger signal had been generated and if the driver has not yet operated said service brake value generator (2), so as to close initially a flow communication between said delivery line (10, 12) and said at least one brake cylinder (6, 8) and to line up then the pressure in said delivery line (10, 12).

2. Brake system according to Claim 1, **characterised in that** said electronic controller (ECU) is configured in such a way that said second control valve means (PCV) passes the pressure prevailing in said delivery line (10, 12) in modified or non-modified form in a controlled manner to said brake cylinder (6, 8) when the driver actuates said service brake value generator (2).

3. Brake system according to Claim 1 or 2, **characterised in that** said means for detecting a dangerous situation requiring emergency brake application are so designed that they generate a danger signal when at least one of the following characteristic parameters or at least one characteristic parameter derived from at least two of these characteristic parameters rises above or drops below a defined limit: the speed and/or the acceleration with which a steering wheel (18) of the vehicle is operated and/or with which a clutch pedal of the vehicle is operated and/or with which the actuating force acting upon an accelerator pedal is released and/or the distance and/or the relative velocity of the vehicle is changed relative to another vehicle or relative to an object at rest.

4. Brake system according to Claim 3, **characterised in that** said means for detecting a dangerous situation requiring emergency brake application are so configured that, while the vehicle is driven, a driver-related mean value and/or one driver-related maximum value among a number of stored values of at least one characteristic parameter is determined and a danger signal is generated in the event that said driver-related mean value and/or said driver-related maximum value rises above or drops below a limit.

5. Brake system according to at least one of the preceding Claims, **characterised in that** said first control valve means (EPM) is constituted by an at least single-channel pressure regulator module including at least one regulating electronic system, a relay valve, which is controlled by at least one electromagnetic inlet valve and one electromagnetic discharge valve, as well as a pressure sensor.

6. Brake system according to at least one of the preceding Claims, **characterised in that** said second control valve means (PCV) includes at least one electromagnetic pressure control valve including at least one 3/2-way valve for maintaining, establishing or reducing the pressure.

## Revendications

1. Système de freinage d'un véhicule (1), comprenant
(a) un premier moyen à soupape de distribution (EPM) commandé par un générateur d'effort de freinage de service (2), actionné par le conducteur, qui, en réponse à un signal de demande de freinage, modulé par ledit générateur d'effort de freinage de service (2), engendre une pression de freinage pour au moins un cylindre de frein (6, 8),
(b) au moins un deuxième moyen à soupape de distribution (PCV) pour le réglage, en fonction de patinage, de ladite pression de freinage modulée par ledit premier moyen à soupape de distribution (EPM),
(c) à la pression de freinage, engendrée par ledit premier moyen à soupape de distribution (EPM), étant délivrée dans une conduite d'alimentation (10, 12) s'étendant entre ledit premier moyen à soupape de distribution (EPM) et ledit deuxième moyen à soupape de distribution (PCV), et
(d) à au moins ledit premier moyen à soupape de distribution (EPM) et ledit deuxième moyen à soupape de distribution (PCV) étant commandé par un dispositif de commande électronique (ECU),
**caractérisé en ce**
(e) **que** des moyens sont disposés à détecter une situation de danger, qui requiert le freinage d'urgence, qui modulent un signal de danger quand il y a une telle situation de danger,
(f) audit dispositif de commande électronique (EC) étant configuré d'une telle manière, qu'il règle ledit premier moyen à soupape de distribution (EPM) et ledit deuxième moyen à soupape de distribution (PCV), si un signal de danger était engendré et si le conducteur n'a pas encore actionné ledit générateur d'effort de freinage de service (2), afin de fermer d'abord une communication d'écoulement entre ladite conduite d'alimentation (10, 12) et ledit au moins un cylindre de frein (6, 8) et afin de régler ensuite la pression dans ladite conduite d'alimentation (10, 12).

2. Système de freinage selon la revendication 1, **caractérisé en ce que** ledit dispositif de commande électronique (ECU) est configuré d'une telle façon, que ledit deuxième moyen à soupape de distribution (PCV) passe la pression régnant dans ladite conduite d'alimentation (10, 12) sou forme modifiée ou non modifiée, de manière commandée, dans ledit cylindre de frein (6, 8), quand le conducteur actionne ledit générateur d'effort de freinage de service (2).

3. Système de freinage selon la revendication 1 ou 2, **caractérisé en ce que** lesdits moyens à détecter une situation de danger, qui requiert le freinage d'urgence, sont conçus en une telle forme, qu'ils engendrent un signal de danger, quand au moins un des paramètres caractéristiques suivants ou au moins un paramètre caractéristique, dérivé d'u moins deux de ces paramètres caractéristiques, dépasse une limite supérieure ou inférieure définie : la vitesse et/ou l'accélération d'actionnement d'un volant de direction (18) et/ou d'un pédale d'embrayage du véhicule et/ou de la détente de l'effort d'actionnement, qui agit sur un pédale d'embrayage, et/ou du changement de la distance et/ou de la vitesse relative du véhicule relativement à un autre véhicule et à un objet au repos.

4. Système de freinage selon la revendication 3, **caractérisé en ce que** lesdits moyens à détecter une situation de danger, qui requiert le freinage d'urgence, sont conçus d'une telle manière, que, quand le véhicule est en marche, une valeur moyenne relative au conducteur et/une valeur maximale relative au conducteur, parmi un nombre de valeurs mémorisées d'au moins un paramètre caractéristique, soit établie et un signal de danger soit engendré au cas que ladite valeur moyenne relative au conducteur et/ou ladite valeur maximale relative au conducteur dépasse une limite supérieure ou inférieure.

5. Système de freinage selon au moins une des revendications précédentes, **caractérisé en ce que** ledit premier moyen à soupape de distribution (EPM) est constitué par un module régulateur à au moins un canal, qui renferme au moins un système électronique de réglage, une soupape de relais, qui est commandé par au moins une soupape d'alimentation électromagnétique et une soupape de décharge électromagnétique, ainsi qu'un capteur de pression.

6. Système de freinage selon au moins une des revendications précédentes, **caractérisé en ce que** ledit deuxième moyen à soupape de distribution (PCV) renferme au moins une soupape de commande de pression électromagnétique, qui comprend au moins une soupape à 3/2 voies afin de maintenir, établir ou réduire la pression.
